# EUROPEAN PATENT SPECIFICATION

(11) **EP 3 284 563 B1**
(45) Date of publication and mention of the grant of the patent: **20.04.2022**
(21) Application number: 17181575.6
(22) Date of filing: 17.07.2017
(51) Int. Cl.: B25J 9/16

(54) **PICKING SYSTEM**
KOMMISSIONIERSYSTEM
SYSTÈME DE CAPTURE

(30) Priority: 17.08.2016 JP 2016159901
(43) Date of publication of application: 21.02.2018
(73) Proprietor: Kabushiki Kaisha Yaskawa Denki, Kitakyushu-shi, Fukuoka 806-0004 (JP)
(72) Inventor: TAKANISHI, Kanji, Kitakyushu-shi, Fukuoka 806-0004 (JP); KUTSUKAKE, Fuminori, Kitakyushu-shi, Fukuoka 806-0004 (JP); YAMAMOTO, Akihiro, Kitakyushu-shi, Fukuoka 806-0004 (JP); ISHIKAWA, Shinichi, Kitakyushu-shi, Fukuoka 806-0004 (JP)
(74) Representative: Grünecker Patent- und Rechtsanwälte PartG mbB

(56) References cited:
- US-A1- 2011 166 696
- US-A1- 2014 058 562
- KHODABANDEHLOO K: "Robotic packaging of poultry products", ROBOTICS IN MEAT, FISH AND POULTRY PROCESSING, XX, XX, 1 September 1992 (1992-09-01), pages 70-97, XP002366151,
- LEAHY JR M B ET AL: "NEURAL NETWORK PAYLOAD ESTIMATION FOR ADAPTIVE ROBOT CONTROL", IEEE TRANSACTIONS ON NEURAL NETWORKS, IEEE SERVICE CENTER, PISCATAWAY, NJ, US, vol. 2, no. 1, 1 January 1991 (1991-01-01) , pages 93-100, XP000202656, ISSN: 1045-9227, DOI: 10.1109/72.80294

## Description

### BACKGROUND

### FIELD OF THE INVENTION

The present invention relates to a picking system.

### DISCUSSION OF THE BACKGROUND

Japanese Unexamined Patent Application Publication No. 2015-205368 discloses a robot that performs a picking operation by causing a hand of the robot to hold an object, such as a part and a component.

The robot recited in Japanese Unexamined Patent Application Publication No. 2015-205368 has difficulty in holding the object firmly when the object is a food or other substance whose shape and weight vary from object to object.

The present disclosure has been made in view of the above circumstances, and it is an object of the present disclosure to provide a picking system that has an improvement to the picking function to accommodate to objects whose shape and weight vary from object to object.

US 2011/166696 relates to a method of treating objects according to their individual weights. More particularly, the invention relates to a method of filling containers with objects whereof the weight distribution is random. The method comprises steps of: detecting an object, grasping the detected object using a gripper mounted on a robot, and measuring the weight of the object grasped using a weight or force sensor. To fill containers with a minimum weight, the method comprises after having acquired the weight associated with the object, a search in a collection of containers, for an optimal container using a sorting algorithm for depositing the object with the acquired weight in the optimal container estimated by the sorting algorithm.

Non patent document Lehay Jr M B er al "Neural Network Payload Estimation for Adaptive Robot Control", IEEE Transactions on Neural Networks, IEEE Service Center, Piscataway, NJ, US, vol. 2, no. 1, January 1, 1991, relates to utilizing artificial neural networks to enhance high-speed tracking accuracy of robotic manipulators. A model-based control algorithm uses a nominal model of dynamical interactions to reduce disturbances. A neural network payload estimation uses a series of artificial neural networks to recognize payload variation.

### SUMMARY

The invention is defined by the features of the independent claims. Any reference to inventions or embodiments not falling within the scope of the independent claims are to be interpreted as examples useful for understanding the invention.

According to one aspect of the present disclosure, a picking system includes a shape obtainer, a weight estimator, a picking robot, and a controller. The shape obtainer is configured to obtain shape information of an object. The weight estimator is configured to estimate a weight of the object based on the shape information obtained by the shape obtainer. The picking robot is configured to perform a picking operation on the object. The controller is configured to control the picking operation based on the weight estimated by the weight estimator.

The present invention provides an improvement to the picking function to accommodate to objects whose shape and weight vary from object to object.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a diagram illustrating an exemplary system block configuration of a picking system according to an embodiment;
FIG. 2 illustrates a comparison made adjacent to a gripper between weight-sensor attached state and weight-sensor detached state;
FIG. 3 illustrates an example of image information obtained by a camera, the image information being a top view of a container in which a large number of food products are stored;
FIG. 4 is a side phantom view of the container illustrating the large number of food products stored in the container;
FIG. 5 is a top view of the container with those food individuals which are holdable and whose weight can be estimated being identified on the image information illustrated in FIG. 3;
FIG. 6 is a top view of the container illustrating an example of estimated weight information indicating estimated weight of each of the identified food individuals;
FIG. 7 illustrates an exemplary artificial neural network applied to a weight estimator;
FIG. 8 is a flowchart of a procedure for processing in learning mode performed by CPU of an upper-level controller;
FIG. 9 illustrates an example of an allotting work plan set up by a work planner;
FIG. 10 is a flowchart of a procedure for processing in execution mode performed by the CPU of the upper-level controller;
FIG. 11 illustrates an example of how three-dimensional cameras obtain image information of a food individual;
FIG. 12 illustrates an exemplary artificial neural network applied to the weight estimator when a weight value is estimated based on two pieces of shape information; and
FIG. 13 is a system block diagram of a hardware configuration of the upper-level controller.

### DESCRIPTION OF THE EMBODIMENTS

The embodiments will now be described with reference to the accompanying drawings, wherein like reference numerals designate corresponding or identical elements throughout the various drawings.

### Configuration of Picking System

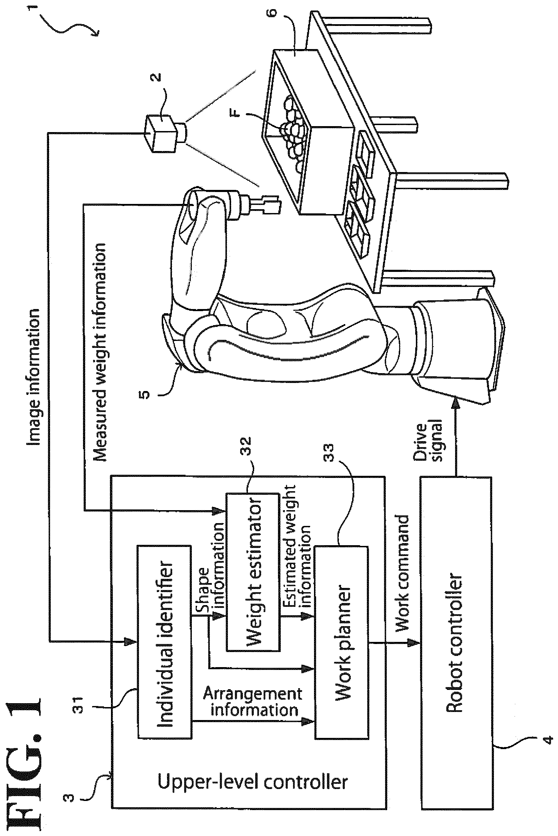

FIG. 1 is a diagram illustrating an exemplary system block configuration of a picking system 1 according to this embodiment. The picking system 1 picks a food from among a large number of food products overlapping each other in a container and allots the food to one of a plurality of target containers. As illustrated in FIG. 1, the picking system 1 includes a camera 2, an upper-level controller 3, a robot controller 4, and a picking robot 5.

In this embodiment, the camera 2 is an imaging device to optically obtain two-dimensional image information. The camera 2 is disposed over a container 6 (which is a non-limiting example of the predetermined container recited in the appended claims) and capable of picking up an image of an entirety of a large number of food products F (which are non-limiting example of the objects and which are deep-fried chicken in this embodiment) overlapping each other in the container 6.

The upper-level controller 3, based on image information obtained by the camera 2, performs processing associated with the picking operation of the picking robot 5 and outputs a work command to the robot controller 4. The upper-level controller 3 includes an individual identifier 31, a weight estimator 32, and a work planner 33.

The individual identifier 31 performs image recognition with respect to the image information obtained by the camera 2 so as to identify individual foods, from among the plurality of food products F overlapping each other in the container 6 as of the time of the image recognition, that the picking robot 5 is able to pick (such individual food will be hereinafter occasionally referred to as individual food product F). Then, the individual identifier 31 outputs shape information of each of the pickable individual food products F to the weight estimator 32 and the work planner 33, and outputs arrangement information of each of the pickable individual food products F to the work planner 33 (detailed later).

Based on the shape information of each pickable individual food product F input from the individual identifier 31, the weight estimator 32 estimates the weight of each pickable individual food product F, and outputs the obtained estimated weight information to the work planner 33. In this embodiment, the weight estimator 32 performs machine learning using an artificial neural network to perform weight estimation processing that is based on the shape information of each pickable individual food product F (detailed later).

Based on the arrangement information and the shape information input from the individual identifier 31 and based on the estimated weight information input from the weight estimator 32, the work planner 33 plans details of work for the picking robot 5 to perform, generates a work command based on the details of work, and outputs the work command to the robot controller 4.

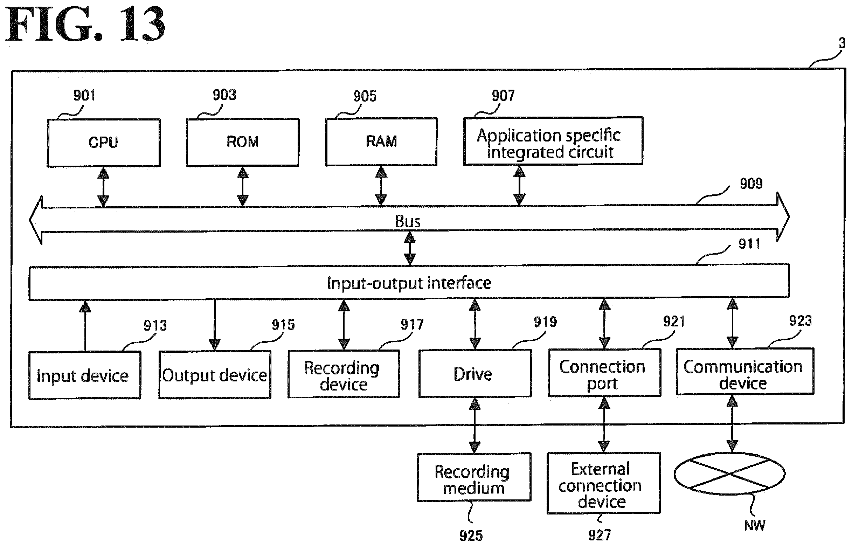

In another possible embodiment, the processings performed by the individual identifier 31, the weight estimator 32, and the work planner 33 may be performed by a smaller number of processing elements (for example, a single processing element) or by a larger number of processing elements. In still another possible embodiment, the functions of the upper-level controller 3 may be implemented by programs executed by a CPU 901 (described later by referring to FIG. 13) or may be partially or entirely implemented by a tangible device or devices such as an application specific integrated circuit (ASIC), a field-programmable gate array (FPGA), and other electric circuit.

The robot controller 4, based on the work command input from the work planner 33 of the upper-level controller 3, controls a drive signal to be output to the motor (not illustrated) to drive each axis of the picking robot 5.

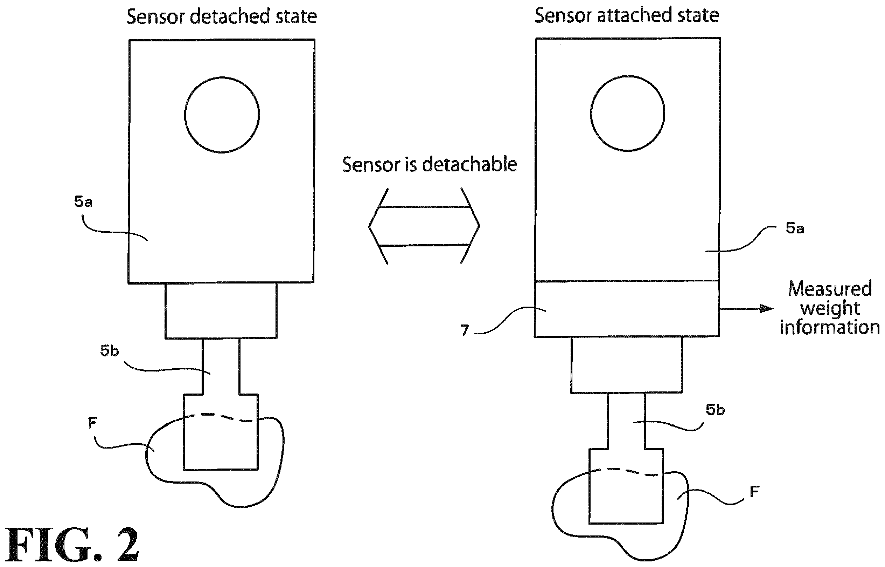

In this embodiment, the picking robot 5 is an arm manipulator of six-axis control and includes a gripper 5b (which is a non-limiting example of the holder recited in the appended claims). The gripper 5b is disposed at the leading end, 5a, of the arm of the picking robot 5 and is capable of holding a food product F. With this configuration, the picking robot 5 has a function to pick one food product F in the container 6 at a time and convey the food product F to another container in the vicinity of the container 6. As illustrated in FIG. 2, a weight sensor 7 is attachable and detachable to and from a position between the gripper 5b and the leading end 5a of the arm of the picking robot 5. When the weight sensor 7 is in attached state, the weight sensor 7 measures the weight of the food product F held by the gripper 5b, excluding the weight of the gripper 5b, and outputs the measured weight (measured weight information) to the weight estimator 32. The measured weight information is used by the weight estimator 32 in learning mode, described later, and can also be used to determine a food product F as non-standard in terms of weight (detailed later). Features of this Embodiment

In this embodiment, the food products F are deep-fried chicken. In many instances, deep-fried chicken is soft and varies in shape and weight from food product F to food product F. Conventionally, it was believed to be difficult for a picking robot to perform a picking operation on such food product F, such as automatically holding, raising, conveying, and placing the food product F. One difficulty is the adjustment of the holding force. Specifically, even if the holding direction and the holding angle are optimized for the shape of each individual food product F, an insufficient holding force can undermine holding reliability, whereas an excessively large holding force can damage the food product F. In view of this situation, a possible way is to accurately estimate the weight of an individual food product F before holding the individual food product F and to use the estimated weight as a basis for setting an optimal holding force to hold the individual food product F.

In some cases, it is necessary to actually hold an individual food product F so as to measure its weight. Having to hold the individual food product F can greatly undermine the efficiency with which the individual food product F is allotted to a container, such as a lunchbox. Further, the addition of a weight sensor to measure the weight of the individual food product F can increase the production cost of the picking system 1 as a whole.

In view of this situation, in this embodiment, the camera 2 obtains shape information of each individual food product F by optical imaging and image recognition, and the weight estimator 32 estimates the weight of each individual food product F based on the shape information. This configuration ensures quickness in estimating the weight of a stationary food product F waiting to be held. Based on the estimated weight, the work planner 33 optimizes the holding force of the gripper 5b.

For the picking system 1 to be able to hold a food product F, optical devices such as a camera and a laser scanner are necessary for detecting the position, shape, and posture of the food product F. Image information obtained by the optical devices undergoes software processing. In this manner, the weight estimator 32 is implemented. This configuration eliminates the need for attaching the weight sensor 7 at the time of the actual picking operation. This configuration, as a result, eliminates or minimizes increase in production cost. Also, this embodiment eliminates the need for physically holding and raising the individual food product F in estimating the weight of the individual food product F. Instead, this embodiment uses the above-described optical sensing to estimate the weight of the individual food product F. This configuration ensures quickness in estimating the weight of the individual food product F and improves the efficiency with which the individual food product F is allotted to a container. These functions of the elements of the picking system 1 are implemented by processings described in detail below.

### Individual Identification Processing

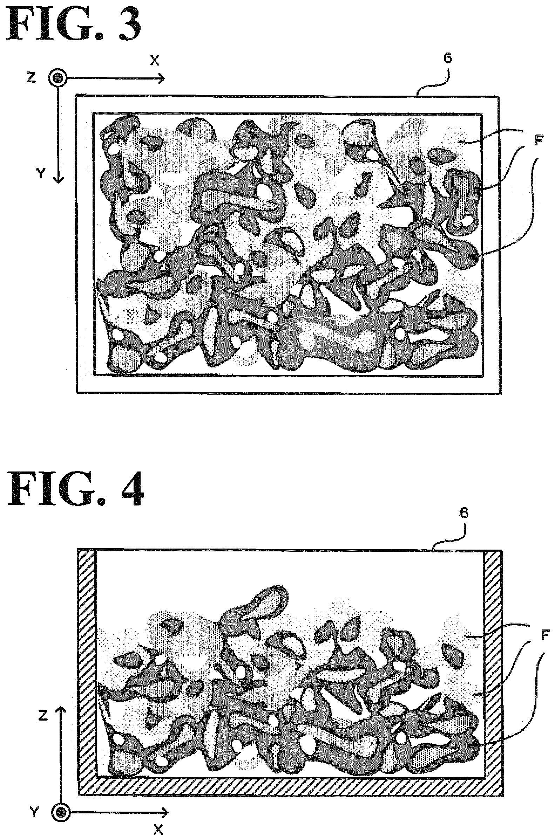

FIG. 3 is a top view of the container 6 in which a large number of food products F are stored. FIG. 4 is a side phantom view of the container 6 illustrating the large number of food products F stored in the container 6. The image illustrated in FIG. 3 is image information obtained by the camera 2 and is subjected to matching with operation coordinates of the picking robot 5 (XYZ coordinates illustrated in FIG. 3).

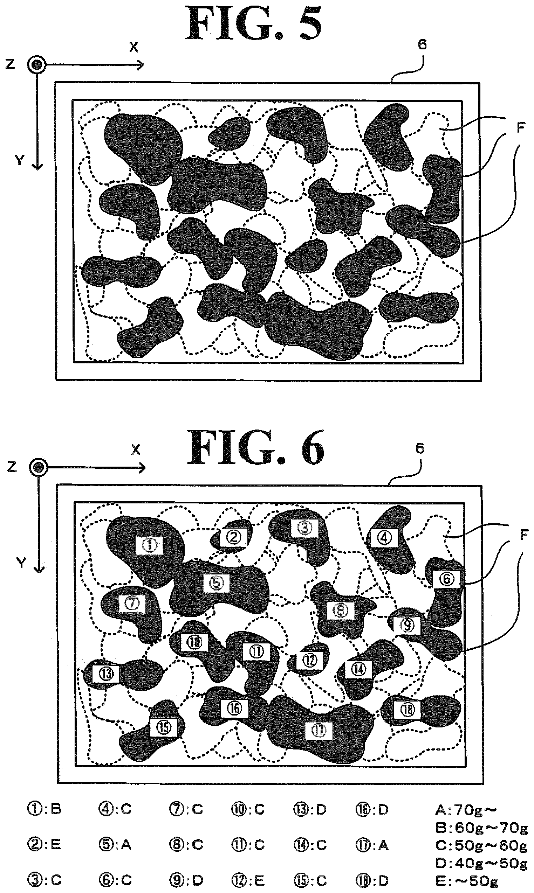

In order to save the working space of the picking system 1, the deep-fried chicken food products F are not conveyed on a belt conveyor but are supplied in the container 6 in which the food products F overlap each other. In this case, for those food products F hidden under other food products F, it can be difficult to obtain accurate shape information by the above-described optical sensing and to estimate the weight. In view of this situation, in this embodiment, when the individual identifier 31 has determined that some food products F among the plurality of food products F overlapping each other are able to undergo the picking operation of the picking robot 5 (that is, able to be held and conveyed by the picking robot 5), the individual identifier 31 regards the some food products F as being exposed enough to enable the optical sensing of the camera 2 to obtain the entire shape of each of the some food products F and to enable the weight estimation. Thus, the individual identifier 31 selectively identifies some food products F. FIG. 5 is a top view of the container with those food products F which are holdable and whose weight can be estimated being identified on the image information illustrated in FIG. 3 and colored in black. In the embodiment illustrated in FIG. 5, 18 food products F are identified and colored in black.

The individual identifier 31 generates arrangement information of each of the identified food products F. The arrangement information indicates the position and posture of the identified food product F (that is, the arrangement of the identified food product F) in the coordinate system. The individual identifier 31 also generates shape information about the shape, including the size, of each identified food product F. The individual identification processing of the individual identifier 31 can be implemented by conventional image recognition technology, and will not be elaborated here. In the embodiment illustrated in FIG. 5, the shape information is in the form of image information (a two-dimensional array of binary pixels) of the identified food products F colored in black.

### Weight Estimation Processing

As illustrated in FIG. 6, the weight estimator 32 estimates the weight of each of the identified individual food products F. In this embodiment, each identified food product F is assigned identification number (1 through 18) and, according to the estimated weight, classified as belonging to one of five weight ranges A to E. The five weight ranges A to E are weight range A for 70 grams (g) per food product F, weight range B for 60g to 70g per food product F, weight range C for 50g to 60g per food product F, weight range D for 40g to 59g per food product F, and weight range E for less than 40g per food product F.

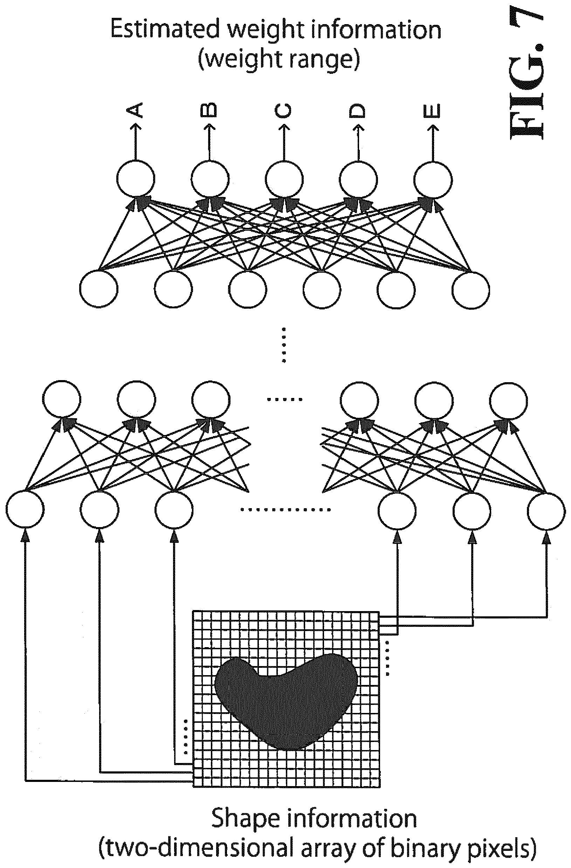

As described above, the weight estimator 32 performs machine learning using an artificial neural network to perform weight estimation processing based on the shape information of each individual food product F. A non-limiting example of the artificial neural network is illustrated in FIG. 7. The model illustrated in FIG. 7 shows that the shape information of the individual food product F is input in the form of image information indicating a two-dimensional array of binary pixels, and the image information undergoes clustering to determine the range, among the five weight ranges A to E, to which the weight of the individual food product F belongs.

Such artificial neural network can be implemented through learning of a relationship between the input shape information of the estimation target (food product F, which is deep-fried chicken in this embodiment) and the weight range to be output. The learning is performed when the weight estimator 32 is in learning mode, in which the weight sensor 7 is in attached state. The learning mode is different from execution mode, in which the weight estimator 32 actually performs weight estimation, as detailed later. In the learning mode, the weight estimator 32 adjusts weight coefficients of the edges connecting the nodes of the artificial neural network. Specifically, the weight estimator 32 adjusts the weight coefficients based on teaching data. The teaching data is a combination of input data and output data. The input data is the shape information of the identified food product F. The output data is the range, among the weight ranges A through E, to which the weight of the identified food product F belongs when the weight is measured by the weight sensor 7 while the identified food product F is being subjected to the picking operation of the picking robot 5. This configuration enables the weight estimator 32 to, using the artificial neural network, learn a feature quantity indicating a correlation between the shape information of the individual food product F and the weight range.

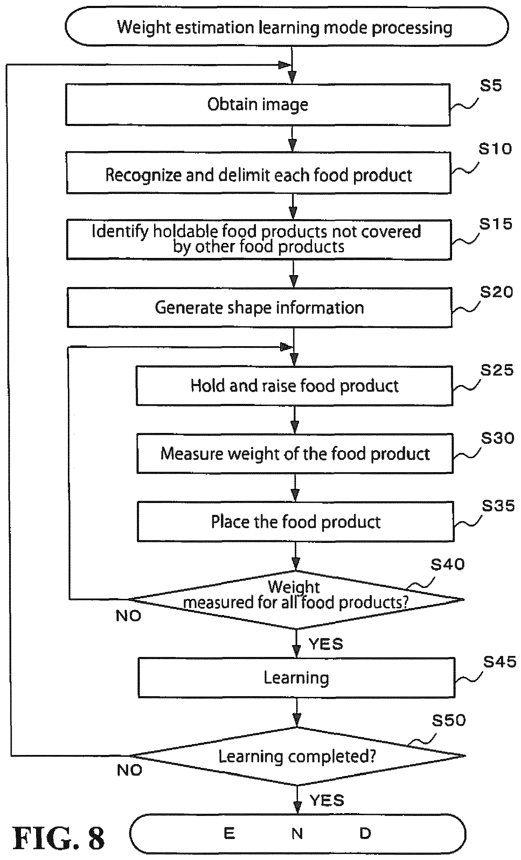

FIG. 8 is a flowchart of a procedure for processing performed by CPU 901 (see FIG. 13, described later) of the upper-level controller 3 in the learning mode. The processing illustrated in FIG. 8 starts upon input of a command for the learning mode from, for example, an operating device, not illustrated, with the weight sensor 7 attached to the picking robot 5.

At step S5, the CPU 901 obtains image information from the camera 2.

At step S10, the CPU 901 performs image recognition of the image information obtained at step S5 to delimit each of the individual food products F.

At step S15, the CPU 901 identifies, from among the individual food products F delimited at step S10, those individual food products F that can be held by the gripper 5b. Specifically, the individual food products F identified as holdable are not covered by any other individual food products F, that is, the holdable individual food products F are so exposed that the entire shape of each individual food product F can be recognized and the weight of each individual food product F can be estimated.

At step S20, the CPU 901 generates shape information of each of the individual food products F identified at step S15. The camera 2 and steps S5 through S20 are non-limiting examples of the shape obtainer recited in the appended claims.

At step S25, the CPU 901 outputs a work command to the robot controller 4 to cause the robot controller 4 to hold and raise one of the individual food products F identified as holdable at step S15. The work command will be described in detail later.

At step S30, the CPU 901 obtains measured weight information indicating the actual weight of the one individual food product F measured by the weight sensor 7 with the one individual food product F held and raised at step S25.

At step S35, the CPU 901 causes the one individual food product F that is being held to be placed at a predetermined position (not illustrated).

At step S40, the CPU 901 determines whether the measured weight information of all the individual food products F identified as holdable at step S15 has been obtained. When there is an individual food product F whose measured weight information is not obtained yet, the determination is "NO", and the procedure returns to step S25, where the processing starting from step S25 is performed again.

When the measured weight information of all the individual food products F identified as holdable at step S15 has been obtained, the determination is "YES", and the procedure proceeds to step S45.

At step S45, the CPU 901 implements learning by adjusting the weight coefficients in the artificial neural network based on teaching data that combines the shape information generated at step S20 with the measured weight information obtained at step S30.

At step S50, the CPU 901 determines whether the learning has ended, that is, whether teaching data of all the individual food products F stored in the container 6 has been obtained. When there is an individual food product F left in the container 6, the determination is "NO", and the procedure returns to step 5, where the processing starting from step S5 is performed again.

When there is no individual food product F left in the container 6, the determination is "YES", and the procedure ends.

### Work Planning Processing

When the learning of the weight estimator 32 is completed, the weight estimator 32 turns into the execution mode, in which the weight estimator 32 performs the picking operation. In the picking operation, the weight estimator 32 allots the individual food products F stored in the container 6 to a plurality of target containers. In the execution mode, the weight sensor 7 is kept detached from the picking robot 5. In this state, the individual identifier 31 and the weight estimator 32 perform individual recognition of the individual food products F based solely on the image information from the camera 2, obtaining arrangement information, shape information, and estimated weight information of each individual food product F. Then, the individual identifier 31 and the weight estimator 32 output the arrangement information, the shape information, and the estimated weight information to the work planner 33.

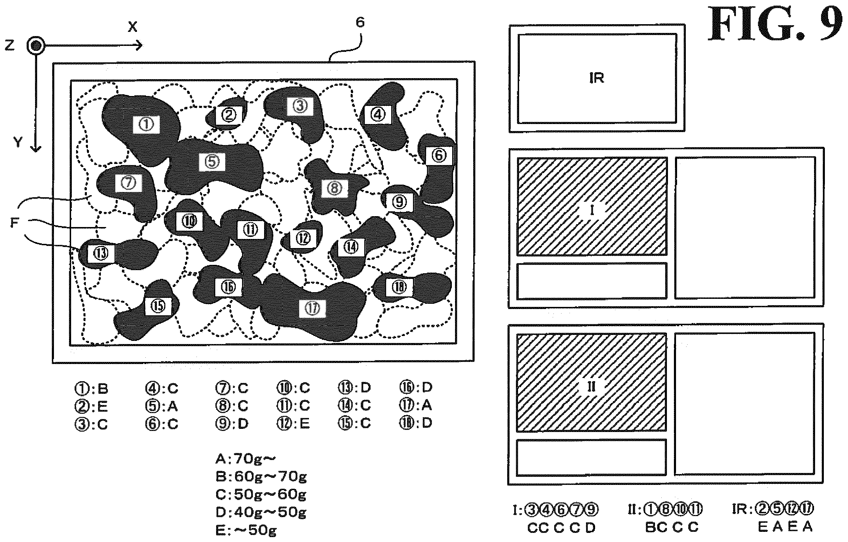

A non-limiting example of allotting work is illustrated in FIG. 9. As illustrated in FIG. 9, two target containers I and II and a non-standard object container IR are arranged adjacent to the container 6. In the embodiment illustrated in FIG. 9, each of the target containers I and II is part of a lunchbox and shaded to indicate the place for the individual food products F. The work planner 33 sets up such an allotting work plan that individual food products F are conveyed from the container 6, and four or five individual food products F are placed in each of the target containers I and II with the total weight of each target container kept within the range of 210 g to 290 g. Specifically, the allotting work plan for the target container I specifies that the target container I be allotted the individual food products F identified as number 3, number 4, number 6, and number 7, which belong to the weight range C, and the individual food product F identified as number 9, which belongs to the weight range D. The allotting work plan for the target container II specifies that the target container II be allotted the individual food product F identified as number 1, which belongs to the weight range B, and the individual food products F identified as number 8, number 10, and number 11, which belong to the weight range C. The allotting work plan set up by the work planner 33 (which can also be referred to as distribution plan for each target container), which will not be further elaborated here, can be implemented by any weight distribution uniformizing technique.

The individual food products F identified as number 5 and number 17, which belong to the weight range A, are determined as overweight and non-standard, and conveyed to the non-standard object container IR. The individual food products F identified as number 2 and number 12, which belong to the weight range E, are determined as underweight and non-standard, and conveyed to the non-standard object container IR. This configuration ensures that individual food products F determined as non-standard in terms of weight can be used in other applications.

Then, based on the arrangement information, the shape information, and the estimated weight information of each of the individual food products F to be conveyed, the work planner 33 calculates a position, a direction, and a holding force for the gripper 5b to hold each individual food product F. The work planner 33 also calculates, based on the allotting work plan, the trajectory of the gripper 5b and the timing of the holding operation. These calculations, which will not be further elaborated here, can be implemented by any technique known in the art, such as shape analysis, stability analysis, and holding position posture search. In the execution mode, the work planner 33 performs these calculations to generate a time-series work command and outputs the work command to the robot controller 4 so as to cause the picking robot 5 to perform the allotting work.

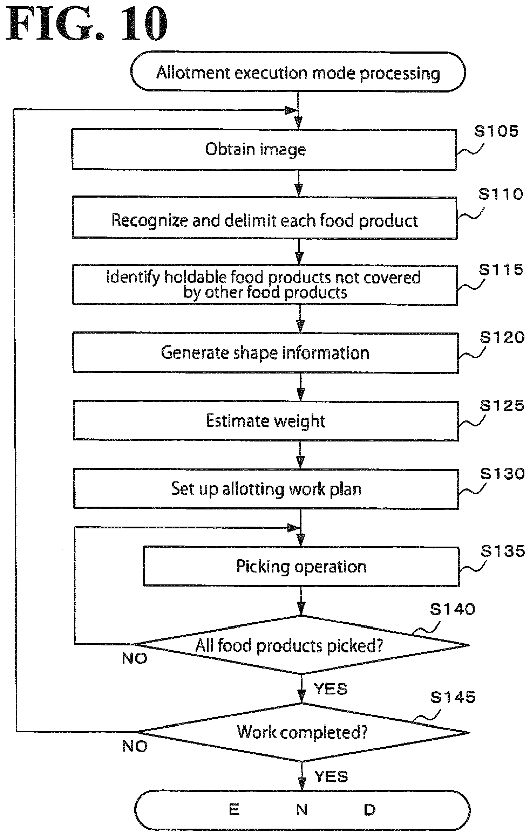

FIG. 10 is a flowchart of a procedure for processing in the execution mode performed by the CPU 901 of the upper-level controller 3 (see FIG. 13, described later). The processing illustrated in FIG. 10 starts upon input of a command for the execution mode from, for example, an operating device, not illustrated, with the weight sensor 7 detached from the picking robot 5.

At step S105, the CPU 901 obtains image information from the camera 2.

At step S110, the CPU 901 performs image recognition of the image information obtained at step S105 to delimit each of the individual food products F.

At step S115, the CPU 901 identifies, from among the individual food products F delimited at step S10, those individual food products F that can be held by the gripper 5b. Specifically, the individual food products F identified as holdable are not covered by any other individual food products F, that is, the holdable individual food products F are so exposed that the entire shape of each individual food product F can be recognized and the weight of each individual food product F can be estimated. The CPU 901 also generates arrangement information of each individual food product F.

At step S120, the CPU 901 generates shape information of each of the individual food products F identified at step S115. The camera 2 and steps S105 through S120 are non-limiting examples of the shape obtainer recited in the appended claims.

At step S125, based on the shape information generated at step S120, the CPU 901 estimates the weights of all the individual food products F identified as holdable at step S115. Specifically, the CPU 901 inputs the shape information of each individual food product F into the artificial neural network, causing a weight range based on the shape information to be output. Then, the CPU 901 generates estimated weight information based on the weight range. The processing at step S125 is a non-limiting example of the weight estimator 32 recited in the appended claims (see FIG. 1).

At step S130, the CPU 901 generates a work command for the robot controller 4 based on the arrangement information generated at step S115, the shape information generated at step S120, and the estimated weight information generated at step S125. Specifically, the CPU 901 sets up an allotting work plan for the target containers I and II, calculates a position, a direction, and a holding force for the gripper 5b to perform the holding operation, and calculates the trajectory of the gripper 5b and the timing of the holding operation. Based on these calculations, the CPU 901 generates a time-series work command.

At step S135, the CPU 901 outputs to the robot controller 4 a work command for each individual food product F so as to cause the picking robot 5 to perform the picking operation.

At step S140, the CPU 901 determines whether the picking operation has been performed on all the individual food products F identified as holdable at step S115. When there is an individual food product F that has not undergone the picking operation yet, the determination is "NO", and the procedure returns to step S135, where the processing starting from step S135 is performed again.

When all the individual food products F identified as holdable at step S115 have undergone the picking operation, the determination is "YES", and the procedure proceeds to step S145. The processing at steps S130 through S140 is a non-limiting example of the controller recited in the appended claims.

At step S145, the CPU 901 determines whether all the individual food products F stored in the container 6 have undergone the picking operation. When there is an individual food product F left in the container 6, the determination is "NO", and the procedure returns to step 105, where the processing starting from step S105 is performed again.

When there is no individual food product F left in the container 6, the determination is "YES", and the procedure ends.

### Advantageous Effects of the Embodiment

As has been described hereinbefore, the picking system 1 according to this embodiment optically obtains shape information of a picking target food product F, and estimates the weight of the food product F based on the shape information. This configuration ensures quickness in estimating the weight of a stationary food product F waiting to be held. Based on the estimated weight, the work planner 33 optimizes the holding force of the gripper 5b. Also in this embodiment, the weight sensor 7 is not necessary in the execution mode. This configuration eliminates or minimizes increase in the production cost of the picking system 1 as a whole. Also, this embodiment eliminates the need for physically holding and raising the food product F in estimating the weight of the food product F. Instead, this embodiment uses the above-described optical sensing to estimate the weight of the food product F. This configuration ensures quickness in estimating the weight of the food product F and improves the efficiency with which the food product F is allotted to a container. This configuration, as a result, provides an improvement to the picking function to accommodate to objects whose shape and weight vary from object to object.

Also in this embodiment, the weight estimator 32 performs machine learning to learn a relationship between the input shape information and the weight of the object to be output, and estimates the weight of the object by the machine learning. This configuration ensures highly accurate weight estimation processing of the weight estimator 32 without design and adjustment of a processing algorithm for the weight estimation processing. The machine learning performed by the weight estimator 32 will not be limited to an artificial neural network (deep learning). Various other methods of machine learning can be used, a non-limiting example being data mining implemented by a Bayesian network or a support vector machine.

Also in this embodiment, the weight sensor 7 is attachable and detachable to and from the picking robot 5, and the weight estimator 32 performs machine learning based on teaching data (using, for example, an artificial neural network). The teaching data is a combination of input data and output data. The input data is the shape information of a food product F. The output data is the actual weight of the food product F measured by the weight sensor 7. Thus, the teaching data specifies how to implement the learning mode, in which the weight estimator 32 performs machine learning. The weight sensor 7 is attached to the picking robot 5 in the learning mode and is kept detached from the picking robot 5 in the execution mode, in which the weight estimator 32 performs weight estimation. The details obtained in the machine learning (such as adjusted internal parameters) can be copied into the weight estimator 32 of another picking system 1 in which no weight sensor 7 is provided.

In order to eliminate or minimize waste of resources, objects classified as non-standard can be used for purposes different from the purposes for which the objects classified as standard are used. In another possible embodiment, the shape information of an object may be color image information so that the coating and the meat are recognized in different colors. When the difference in color indicates an excess or deficiency of the coating, the object may be determined as non-standard. In this manner, standard deep-fried chicken products can be distinguished from non-standard deep-fried chicken products. In this case, the deep-fried chicken products are determined as standard or non-standard based on machine learning of an abnormality determiner (not illustrated) different from the weight estimator 32.

Also in this embodiment, the picking robot 5 includes the gripper 5b. The gripper 5b holds a food product F as a picking operation. The work planner 33 uses the estimated weight information of the food product F estimated by the weight estimator 32 as a basis for setting a holding force for the gripper 5b to hold the food product F. Holding the food product F makes the picking operation of the picking robot 5 more reliable. Setting the holding force of the gripper 5b based on the estimated weight information generated by the weight estimator 32 makes the holding force suitable for the weight of the food product F. For example, when a food product F has a relatively large weight, the holding force set for the food product F is great enough to enable the picking robot 5 to lift the food product F under its weight. Also, when a food product F has a relatively small weight, the holding force set for the food product F is small enough to keep the shape of the food product F from being distorted. Thus, the holding force of the gripper 5b is optimized for the weight of the food product F.

Also in this embodiment, the obtained shape information is shape information of individual food products F, among a plurality of food products F overlapping each other in the container 6, on which the picking robot 5 is able to perform the picking operation. Thus, food products F whose weights can be estimated are identified from among the plurality of food products F overlapping each other. This configuration improves the accuracy of weight estimation.

Also in this embodiment, the work planner 33 controls the picking robot 5 to perform the picking operation on a food product F whose weight is within a weight range set in advance in the estimated weight information generated by the weight estimator 32. This configuration uniformizes the weights of the food products F in allotting the food products F to the target containers I and II, which are lunchboxes in this embodiment.

Also in this embodiment, the work planner 33 selects food products F that are within a capacity range (four or five food products F in this embodiment) set in advance for each of the target containers I and II, which are lunchboxes in this embodiment, and that are within a total weight range (250 g to 260 g in this embodiment) set in advance for each of the target containers I and II based on the capacity range. Then, the work planner 33 controls the picking robot 5 to perform the picking operation on the selected food products F. This configuration uniformizes the number and total of weight of food products F to be allotted to the target containers I and II, which are lunchboxes in this embodiment.

### Modifications

In the above-described embodiment, the imaging device that obtains image information of food products F is the camera 2. In another possible embodiment, another optical sensing means may be used such as three-dimensional cameras and a laser scanner, so that a food product F is identified and subjected to weight estimation based on image information obtained by the three-dimensional cameras or the laser scanner.

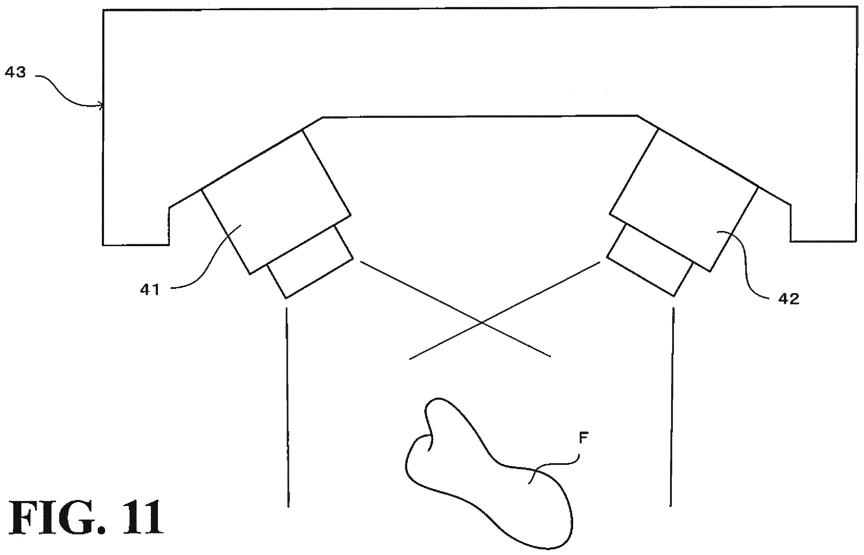

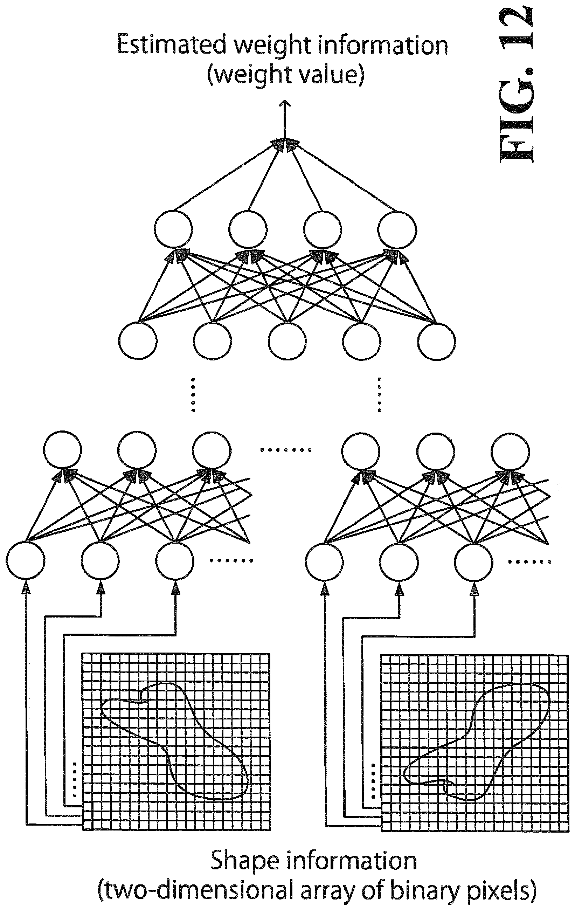

As illustrated in FIG. 11, a three-dimensional camera 43 includes two cameras 41 and 42. The two cameras 41 and 42, which have overlapping imaging regions, obtain two pieces of image information of a food product F. Specifically, as illustrated in the left half of FIG. 12, the two pieces (two-dimensional pixel arrays) of image information provide a parallax of a single food product F, and used as two pieces of shape information of the food product F independently input into the artificial neural network of the weight estimator 32. Based on the two pieces of shape information, the weight of the food product F is estimated. The use of three-dimensional image information improves the accuracy with which the weight of the food product F is estimated.

The value of the weight of the food product F output from the artificial neural network illustrated in FIG. 12 is a continuous value. Specifically, the output layer of the artificial neural network has an output node from which a continuous value of the sum of the set of inputs is output as estimated weight information, without a comparison based on an activation function. Another possible embodiment (not illustrated) of the manner in which the weight value is output is that a plurality of output nodes are provided as output layers to output two weight values obtained through a comparison using an activation function and that the two weight values are combined into a weight value expressed in binary number. In another possible embodiment (not illustrated), the artificial neural network may be designed to estimate the weight value by regression (not illustrated).

In another possible embodiment (not illustrated), the individual identifier 31 may generate three-dimensional model data (such as three-dimensional CAD data, which is in the form of vector data) of a food product F based on two pieces of image information each made up of a two-dimensional pixel array, and input the three-dimensional model data as shape information into the artificial neural network of the weight estimator 32. In another possible embodiment (not illustrated), the individual identifier 31 may calculate the volume of a food product F based on two pieces of image information, and the weight estimator 32 may estimate the weight of the food product F based on the obtained volume information.

In another possible embodiment (not illustrated), a laser scanner may be used as the optical sensing means for obtaining image information of a food product F. Specifically, the laser scanner runs a scanning line of light across the surface of the food product F to measure distances between points on the surface, thus obtaining a collection of distance data as image information. Then, the individual identifier 31 may connect together the distance data constituting the image information to generate and output three-dimensional shape information (such as the above-described three-dimensional model data) of the food product F.

### Hardware Configuration of Upper-level Controller

By referring to FIG. 13, description will be made with regard to a hardware configuration of the upper-level controller 3 in implementing the processings at the elements such as the individual identifier 31, the weight estimator 32, and the work planner 33 performed by the programs executed at the CPU 901.

As illustrated in FIG. 13, the upper-level controller 3 includes the CPU 901, a ROM 903, a RAM 905, an application specific integrated circuit 907, an input device 913, an output device 915, a recording device 917, a drive 919, a connection port 921, and a communication device 923. Examples of the application specific integrated circuit 907 include, but are not limited to, an application specific integrated circuit (ASIC) and a field-programmable gate array (FPGA). These configurations are connected to each other through a bus 909 and an input-output interface 911 so that signals are transmittable to and from the configurations.

The programs may be stored in, for example, the ROM 903, the RAM 905, or the recording device 917.

In another possible embodiment, the programs may be stored in a removable recording medium 925 temporarily or permanently. Examples of the recording medium 925 include, but are not limited to, a magnetic disc such as a flexible disc; an optical disc such as a compact disc (CD), a magneto-optical (MO) disc, and a digital video disc (DVD); and a semiconductor memory. The recording medium 925 may be provided in the form of what is called packaged software. In this case, the programs stored in the recording medium 925 may be read by the drive 919 and stored in the recording device 917 through devices such as the input-output interface 911 and the bus 909.

In another possible embodiment, the programs may be stored in a download site or any other recording device such as a computer (not illustrated). In this case, the programs are transmitted to the communication device 923 through a network NW. Examples of the network NW include, but are not limited to, a local area network (LAN) and the Internet. Then, the programs received by the communication device 923 are stored in the recording device 917 through devices such as the input-output interface 911 and the bus 909.

In another possible embodiment, the programs may be stored in an external connection device 927. In this case, the programs are transmitted through the connection port 921 and stored in the recording device 917 through devices such as the input-output interface 911 and the bus 909.

Then, the CPU 901 performs various processings based on the programs stored in the recording device 917 so as to implement the processings performed at the elements such as the individual identifier 31, the weight estimator 32, and the work planner 33. In executing the programs, the CPU 901 may read the programs directly from the recording device 917 or may temporarily load the programs in the RAM 905. When the CPU 901 receives the programs through devices such as the communication device 923, the drive 919, and the connection port 921, the CPU 901 may execute the programs without storing the programs in the recording device 917.

As necessary, the CPU 901 may perform the various processings based on signals or information input through the input device 913, such as a mouse, a keyboard, and a microphone (not illustrated).

Then, the CPU 901 may output results of the processings from the output device 915, such as a display device and aa sound output device. As necessary, the CPU 901 may send results of the processings through the communication device 923 and the connection port 921 and store the results of the processings in the recording device 917 and/or the recording medium 925.

- 1: Picking system
- 2: Camera (shape obtainer)
- 3: Upper-level controller
- 4: Robot controller
- 5: Picking robot
- 5b: Gripper
- 6: Container (predetermined container)
- 7: Weight sensor
- 31: Individual identifier (shape obtainer)
- 32: Weight estimator
- 33: Work planner (controller)
- F: Food product
- I, II: Target container
- IR: Non-standard container

## Claims

1. A picking system (1), comprising:
a shape obtainer (2, 31) configured to obtain shape information of an object;
a weight estimator (32) configured to estimate a weight of the object based on the shape information obtained by the shape obtainer (2, 31);
a weight sensor (7) configured to measure the weight of the object that is being subjected to the picking operation of the picking robot (5),
wherein the weight estimator (32) is configured to perform machine learning to learn a relationship between the shape information input from the shape obtainer (2, 31) and the weight of the object that the weight estimator (32) is to output by performing the machine learning based on teaching data in a learning mode, the teaching data being a combination of input data and output data, the input data being the shape information obtained by the shape obtainer (2, 31), the output data being the weight of the object measured by the weight sensor (7) while the object is being subjected to the picking operation of the picking robot (5).
a picking robot (5) configured to perform a picking operation on the object; and
a controller (33) configured to control the picking operation based on the weight estimated by the weight estimator (32) in an execution mode,
**characterized in that**
the weight sensor is attachable and detachable from the picking robot (5), wherein
the learning mode is a mode in which the weight sensor (7) is in attached state, and
the execution mode is a mode in which the weight sensor (7) is kept detached from the picking robot.

2. The picking system (1) according to claim 1, wherein the controller (33) is configured to classify the object as non-standard when an error between the weight of the object estimated by the weight estimator (32) and the weight of the object measured by the weight sensor (7) is equivalent to or greater than a predetermined value.

3. The picking system (1) according to any one of claims 1 to 2,
wherein the picking robot (5) comprises a holder configured to hold the object as the picking operation, and
wherein based on the weight of the object estimated by the weight estimator (32), the controller (33) is configured to set a holding force by which the holder holds a predetermined object.

4. The picking system (1) according to any one of claims 1 to 3,
wherein the object comprises a plurality of objects overlapping each other in a predetermined container, and
wherein the shape obtainer (2, 31) is configured to obtain shape information of one object, among the plurality of objects, on which the picking robot (5) is able to perform the picking operation.

5. The picking system (1) according to any one of claims 1 to 4, wherein the controller (33) is configured to control the picking robot (5) to perform the picking operation on the object when the weight of the object estimated by the weight estimator (32) is within a weight range set in advance.

6. The picking system (1) according to claim 5,
wherein the object comprises a plurality of objects overlapping each other in a predetermined container, and
wherein the controller (33) is configured to select at least one object from among the plurality of objects, the at least one object being within a capacity range set in advance for a predetermined target container and within a total weight range set in advance for the predetermined target container based on the capacity range, and configured to control the picking robot (5) to perform the picking operation on the selected at least one object.

## Patentansprüche

1. Entnahme-System (1), das umfasst:
eine Form-Ermittlungseinrichtung (2, 31), die so ausgeführt ist, dass sie Form-Informationen eines Objektes ermittelt;
eine Gewichts-Schätzeinrichtung (32), die so ausgeführt ist, dass sie ein Gewicht des Objektes auf Basis der durch die Form-Ermittlungseinrichtung (2, 31) ermittelten Form-Informationen schätzt;
einen Gewichts-Sensor (7), der so ausgeführt ist, dass er das Gewicht des Objektes misst, das dem Entnahmevorgang durch den Entnahme-Roboter (5) unterzogen wird,
wobei die Gewichts-Schätzeinrichtung (32) so ausgeführt ist, dass sie maschinelles Lernen durchführt, um eine Beziehung zwischen den von der Form-Ermittlungseinrichtung (2, 31) eingegebenen Form-Informationen und dem Gewicht des Objektes zu lernen, das die Gewichts-Schätzeinrichtung (32) ausgeben soll, indem sie das maschinelle Lernen auf Basis von Lern-Daten in einem Lern-Modus durchführt, wobei die Lern-Daten eine Kombination von Eingabe-Daten und Ausgabe-Daten sind, die Eingabe-Daten die durch die Form-Ermittlungseinrichtung (2, 31) ermittelten Form-Informationen sind und die Ausgabe-Daten das Gewicht des Objektes sind, das durch den Gewichts-Sensor (7) gemessen wird, während das Objekt dem Entnahmevorgang durch den Entnahme-Roboter (5) unterzogen wird,
einen Entnahme-Roboter (5), der zum Durchführen eines Entnahmevorgangs an dem Objekt ausgeführt ist; und
eine Steuerungseinrichtung (33), die so ausgeführt ist, dass sie den Entnahmevorgang auf Basis des durch die Gewichts-Schätzeinrichtung (32) geschätzten Gewichtes in einem Ausführungs-Modus steuert,
**dadurch gekennzeichnet, dass**
der Gewichts-Sensor an dem Entnahme-Roboter (5) angebracht und von ihm abgenommen werden kann, wobei
der Lern-Modus ein Modus ist, in dem sich der Gewichts-Sensor (7) in angebrachtem Zustand befindet, und
der Ausführungs-Modus ein Modus ist, in dem der Gewichts-Sensor (7) von dem Entnahme-Roboter abgenommen gehalten wird.

2. Entnahme-System (1) nach Anspruch 1, wobei die Steuerungseinrichtung (33) so ausgeführt ist, dass sie das Objekt als ungenügend klassifiziert, wenn eine Abweichung zwischen dem durch die Gewichts-Schätzeinrichtung (32) geschätzten Gewicht des Objektes und dem durch den Gewichts-Sensor (7) gemessenen Gewicht des Objektes auf oder über einem vorgegebenen Wert liegt.

3. Entnahme-System (1) nach einem der Ansprüche 1 bis 2,
wobei der Entnahme-Roboter (5) einen Halter umfasst, der so ausgeführt ist, dass er das Objekt während des Entnahmevorgangs hält, und
die Steuerungseinrichtung (33) so ausgeführt ist, dass sie auf Basis des durch die Gewichts-Schätzeinrichtung (32) geschätzten Gewichtes des Objektes eine Haltekraft einstellt, mit der der Halter ein vorgegebenes Objekt hält.

4. Entnahme-System (1) nach einem der Ansprüche 1 bis 3,
wobei das Objekt eine Vielzahl einander in einem vorgegebenen Behälter überdeckender Objekte umfasst, und
die Form-Ermittlungseinrichtung (2, 31) so ausgeführt ist, dass sie Form-Informationen eines Objektes aus der Vielzahl von Objekten ermittelt, an dem der Entnahme-Roboter (5) den Entnahmevorgang durchführen kann.

5. Entnahme-System (1) nach einem der Ansprüche 1 bis 4, wobei die Steuerungseinrichtung (33) so ausgeführt ist, dass sie den Entnahme-Roboter (5) so steuert, dass er den Entnahmevorgang an dem Objekt durchführt, wenn das durch die Gewichts-Schätzeinrichtung (32) geschätzte Gewicht des Objektes innerhalb eines im Voraus festgelegten Gewichtsbereiches liegt.

6. Entnahme-System (1) nach Anspruch 5,
wobei das Objekt eine Vielzahl einander in einem vorgegebenen Behälter überdeckender Objekte umfasst, und
die Steuerungseinrichtung (33) so ausgeführt ist, dass sie wenigstens ein Objekt aus der Vielzahl von Objekten auswählt, wobei das wenigstens eine Objekt innerhalb eines im Voraus für einen vorgegebenen Ziel-Behälter eingestellten Kapazitäts-Bereiches sowie innerhalb eines im Voraus für den vorgegebenen Ziel-Behälter auf Basis des Kapazitäts-Bereiches eingestellten Gesamtgewichts-Bereiches liegt, und so ausgeführt ist, dass sie den Entnahme-Roboter (5) so steuert, dass er den Entnahmevorgang an dem ausgewählten wenigstens einen Objekt durchführt.

## Revendications

1. Système de saisie (1), comprenant :
un déterminateur de forme (2, 31) configuré pour obtenir de l'information de forme d'un objet ;
un estimateur de poids (32) configuré pour estimer le poids de l'objet sur base de l'information de forme obtenue par le déterminateur de forme (2, 31) ;
un capteur de poids (7) configuré pour mesurer le poids de l'objet qui est soumis à l'opération de saisie par le robot de saisie (5),
dans lequel l'estimateur de poids (32) est configuré pour mettre en œuvre un apprentissage automatique pour déterminer une relation entre l'information de forme entrée par le déterminateur de forme (2, 31) et le poids de l'objet que l'estimateur de poids (32) doit sortir en mettant en œuvre l'apprentissage automatique sur base de données d'apprentissage dans un mode d'apprentissage, les données d'apprentissage étant une combinaison de données d'entrée et de données de sortie, les données d'entrée étant de l'information de forme obtenue par le déterminateur de forme (2, 31), les données de sortie étant le poids de l'objet mesuré par le capteur de poids (7) alors que l'objet est soumis à l'opération de saisie par le robot de saisie (5),
un robot de saisie (5) configuré pour mettre en œuvre une opération de saisie sur l'objet ; et
un contrôleur (33) configuré pour contrôler l'opération de saisie sur base du poids estimé par l'estimateur de poids (32) en mode d'exécution,
**caractérisé en ce que**
le capteur de poids peut être attaché et détaché du robot de saisie (5), dans lequel
le mode d'apprentissage est un mode dans lequel le capteur de poids (7) est dans un état attaché, et
le mode d'exécution est un mode dans lequel le capteur de poids (7) est maintenu détaché du robot de saisie.

2. Système de saisie (1) selon la revendication 1, dans lequel le contrôleur (33) est configuré pour classifier l'objet comme non standard quand une erreur entre le poids de l'objet estimé par l'estimateur de poids (32) et le poids de l'objet mesuré par le capteur de poids (7) est supérieure ou égale à une valeur prédéterminée.

3. Système de saisie (1) selon l'une quelconque des revendications 1 et 2,
dans lequel le robot de saisie (5) comprend un dispositif de maintien configuré pour maintenir l'objet lors de l'opération de saisie, et
dans lequel, sur base du poids de l'objet estimé par l'estimateur de poids (32), le contrôleur (33) est configuré pour réguler la force de maintien appliquée par le dispositif de maintien pour maintenir un objet prédéterminé.

4. Système de saisie (1) selon l'une quelconque des revendications 1 à 3,
dans lequel l'objet comprend une pluralité d'objets qui se chevauchent dans un récipient prédéterminé, et
dans lequel le déterminateur de forme (2, 31) est configuré pour obtenir de l'information de forme d'un objet, parmi la pluralité d'objets, sur lequel le robot de saisie (5) est capable de mettre en œuvre l'opération de saisie.

5. Système de saisie (1) selon l'une quelconque des revendications 1 à 4, dans lequel le contrôleur (33) est configuré pour contrôler le robot de saisie (5) pour mettre en œuvre l'opération de saisie sur l'objet quand le poids de l'objet estimé par l'estimateur de poids (32) est compris dans une plage de poids réglée à l'avance.

6. Système de saisie (1) selon la revendication 5,
dans lequel l'objet comprend une pluralité d'objets qui se chevauchent dans un récipient prédéterminé, et
dans lequel le contrôleur (33) est configuré pour sélectionner au moins un objet parmi la pluralité d'objets, ledit au moins un objet étant dans une plage de capacité réglée à l'avance pour un récipient cible prédéterminé et dans une plage de poids total réglée à l'avance pour le récipient cible prédéterminé sur base de la plage de capacité, et configuré pour contrôler le robot de saisie (5) pour mettre en œuvre l'opération de saisie sur ledit au moins un objet sélectionné.
